# EUROPEAN PATENT APPLICATION

(11) **EP 3 441 041 A1**
(43) Date of publication of application: **13.02.2019**
(21) Application number: 16897794.0
(22) Date of filing: 21.09.2016
(51) Int. Cl.: A61C 8/00

(54) **SCREW AND ACTUATING TOOL FOR DENTAL IMPLANTOLOGY**

(30) Priority: 04.04.2016 ES 201630407
(71) Applicant: Vogul, S.L.U., Andorra (AD); Padrós Roldán, Roberto, 08034 Barcelona (ES)
(72) Inventor: PADRÓS ROLDÁN, Roberto, 08034 Barcelona (ES); MARTINEZ LOPEZ, Jordi, Planta Baixa 2a (AD); VALLS ANDIÑACH, Joan, Planta Baixa 2a (AD); TENA CORTS, Guillem, Planta Baixa 2a (AD)
(74) Representative: Diaz Nunez, Joaquin
(86) International application number: PCT/ES2016/000104
(87) International publication number: WO 2017/174830

(57) **Abstract**

Screw and drive tool for dental implantology; comprising: one of them, a rounded toothed head (21), with a series of teeth (22) peripherally distributed; and the other, a prismatic housing (13) with a plurality of longitudinal channels (14). The above mentioned longitudinal channels (14) have a greater width than the corresponding teeth (22), so that in the coupling position of the screw with the drive tool, the toothed head (21) is imparted relative rotation of a certain breadth (a) inside the prismatic housing (13) and with respect to the geometric axis of the screw, between: an operative tightening position in which the teeth (22) and the channels (14) contact each other by means of first sides (22nd, 14th); and an operative loosening position in which the teeth and the channels contact each other by means of second sides (22b, 14b).

## Description

### Object of the invention

The object of the invention is a screw applicable in dental implantology for the fixation of a prosthesis to an implant, and a drive tool of said screw.

### Field of application of the invention

This invention is applicable in the field of dental implantology.

### Prior Art

In the field of dental implantology the use of different types of screws for the fixation of a prosthesis to an implant is widely known.

Generally, these fixing screws pass through a top orifice or chimney of the prosthesis to reach the implant and be screwed thereto.

Initially, this procedure was always performed on the same axis of the dental implant implying prosthetic limitation that hindered restoration by means of a screw in procedures where the axis of the implant exited through the vestibular part of the tooth.

The placement and subsequent extraction of this prosthesis fixing screw is performed by means of a drive tool adapted to couple with the screw head and impart rotation so as to tighten or loosen said screw.

For years, different types of screws and tools for dental implantology have existed that aim to screw a prosthesis or structure correcting the angulation with respect to the axis of the dental implant.

The following are different documents related to the fixation of prostheses to implants: WO2014012970A1; WO2013004387A1; WO2013004387; WO2011042583; EP2269538; ES2278477_A1; WO2014076332A1

With the closest background to the invention herein, it is necessary to mention the invention patent ES2279676B1 in which a tool is used with an "Allen's ball" head type that connects internally in a housing provided in the screw head. This solution allows a reduced angulation between the tool axis and the screw axis, specifically in the order of 20º.

The invention patent ES2336062B1 also describes a screw for fixing a prosthesis on a dental implant and a tightening wrench that allows slightly higher inclinations of the tool with respect to the axis of the screw.

In contrast to the background of the aforementioned ES2279676B1, in this case the screw has a head with a substantially spherical protuberance, provided with a plurality of curved, concave southern recesses configured to receive one face of a screw manipulation or driving tool and having a latitude between ±80 ° with respect to an equator of the screw head.

This specific configuration allows the screw head to adapt to the end of the tightening wrench with an inclination of up to 30 ° with respect to the screw axis.

The aforementioned backgrounds continue to have important limitations both in terms of:
- the massive angulation of the tool with respect to to the axis of the fixing screw and therefore of the implant, which in no case exceeds 35 ° and
- the possibility of the disablement of the tightening wrench, preventing its extraction, when the contact surface of the screw experiences deformation during its tightening with the drive tool.

The first disadvantage is determined by a design issue of the screw head and the coupling end or the tool with it.

The second disadvantage is determined by the fact that both the housing or that defined in the screw as the tool head intended to be coupled with it have combined or complementary polygonal sections that are designed to fit snugly together so that the screw can be placed in the head of the driving tool or/and be moved to the mounting position with the tool itself.

Nevertheless, this determines that both the tightening surfaces and the loosening surfaces should be the same and in case of deformation during tightening of the screw, the latter is rendered useless, being necessary in some cases to destroy the prosthesis as the screw cannot be unscrewed.

### Description of the invention.

The screw and the drive tool, object of the invention, have particular constructions aimed at defining differentiated contact surfaces in the tightening and loosening positions of the implant, so that in case of deterioration of the contact surfaces in the operative tightening position, due for example to the application of excessive force, the aforementioned deterioration does not affect the contact surfaces in the operative loosening position, allowing the extraction of the screw.

Another object of the invention is to allow an angulation between the screw and tool axes of up to 45º, overcoming the angulation achieved by said backgrounds and improving the accessibility and convenience in driving the screw by means of the tool.

The screw comprises a threaded end section section for its fixation to an implant and/or prosthetic abutment.

The screw and the driving tool of the invention comprise: one of them, a toothed rounded head with a series of teeth distributed peripherally; and the other, a prismatic housing with a plurality of longitudinal channels distributed in its periphery; the number of channels being equal to or greater than the number of teeth of the toothed head, and preferably a multiple thereof.

In accordance with the invention; the aforementioned longitudinal channels have a greater width than the corresponding teeth, so that in the coupling position of the screw with the driving tool, the toothed head is imparted relative rotation of a certain breadth (a) inside the prismatic housing and with respect to the geometric screw axis, between:
- an operative tightening position, in which a first side of the teeth establishes surface contact with the first side of the channels and the second side of the teeth remains distanced from a second side of the channels and without contact with it; and
- an operative loosening position, in which a second side of the teeth establishes surface contact with the second side of the channels, and the first side of the teeth remains distanced from the first side of the channels and without contact with it.

As already mentioned, the prismatic housing has a number of longitudinal channels equal to or greater than the number of teeth of the toothed head and is comprised preferably of between 3 and 12 channels; allowing in any case the relative rotation of the toothed head with respect to the prismatic housing between the operative tightening position and the operative loosening position.

The toothed head can have a spherical or oval configuration allowing, together with the possibility of relative rotation between said toothed head and the prismatic housing, between the operative positions of tightening and loosening, an inclination or angulation of up to 45 degrees between the axis of the drive tool and the axis of the fixing screw.

### Description of the figures.

To complement the description being given and in order to facilitate the comprehension of the characteristics of the invention, a set of drawings accompanies the description herein in which, with an illustrative and not limitative character, the following has been shown:
- Figure 1 shows a view in elevation of an example of embodiment of the screw and the driving tool for dental implantology in a coupling position and according to the invention.
- Figure 2 shows a view in elevation of the screw sectioned by a vertical plane and of the driving tool disengaged from the same and displaced laterally
- Figure 3 shows a plan view of figure two in which the toothed head is sectioned by the plane A-Á referred to in the aforementioned figure 2.
- Figure 4 shows a top plan view of the toothed head, sectioned by a horizontal plane and coupled in the prismatic housing, in an operative tightening position of the screw.
- Figure 5 shows a similar view to the previous one with the toothed head in an operative loosening position of the screw.
- Figure 6 shows a view in elevation of the toothed tool head coupled in the prismatic housing of the screw, in a position of maximum lateral angulation.

### Preferred embodiment of the invention.

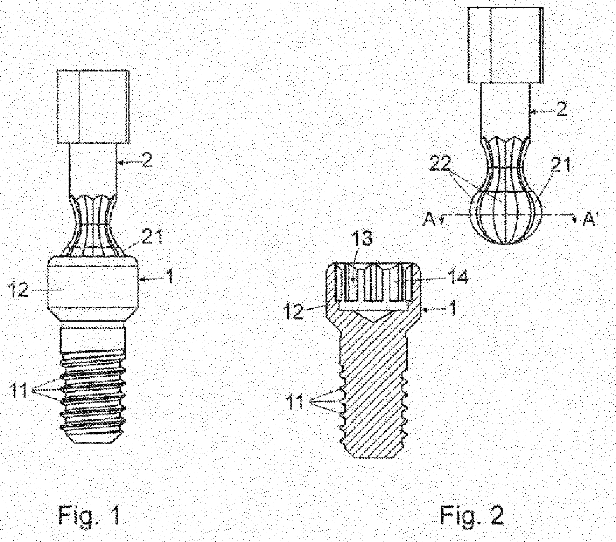

FIG. 1 shows an embodiment example of the screw (1) and driving tool (2) applicable in dental implantology, according to the invention.

The screw (1) comprises a threaded end section for its fixation to an implant, and a head (12) attachable to a driving tool (2) that comprises a generally spherical toothed head (21), with a plurality of teeth (22) distributed in its periphery.

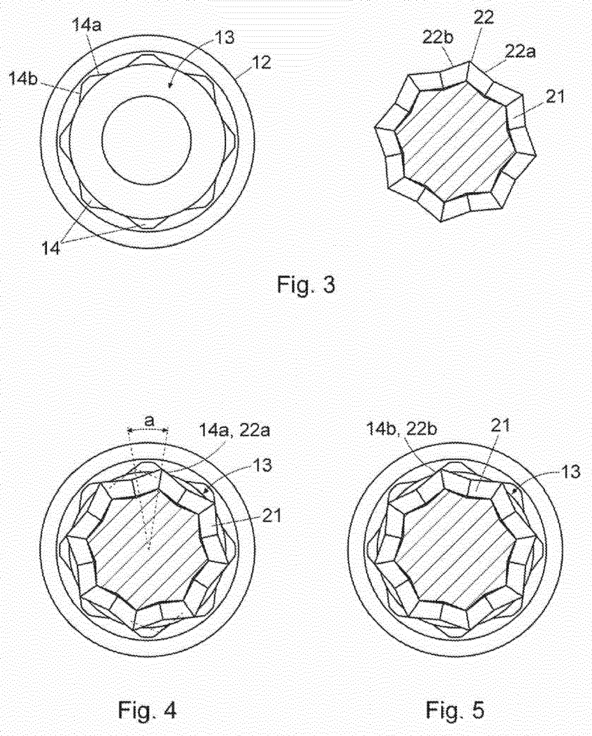

As can be observed in figures 2 and 3, the head (12) of the screw (1) comprises a prismatic housing (13) with a plurality of longitudinal channels (14) in its periphery.

In this example of embodiment the prismatic housing (13) has a depth of between 0,5 and 2,0 millimeters, and the toothed head (21) a diameter of between 0,8 mm and 3,0 millimeters.

The teeth (22) of the toothed head (21) correspond in number and distribution to the channels (14) defined in the prismatic housing (13) of the screw (1).

As can be observed in the aforementioned figure (3), each of the channels (14) of the prismatic housing comprises a first side (14a) and a second side (14b) on which act respectively and selectively a first side (22nd) and a second side (22b) of the teeth (22) of the toothed head (21) during the tightening and loosening operations of the screw (1).

As can be observed in figures 4 and 5 the teeth (22) of the head (21) of the drive tool have a smaller width than the longitudinal channels (14) of the prismatic housing of the screw (1); which allows a relative rotation (a) of the toothed head (21) with respect to the prismatic housing (13) of the screw (1), between: - an operative tightening position shown in figure 4, and - an operative loosening position shown in figure 5.

Figure 4 shows the toothed head (21) in an operative tightening position, in a clockwise direction, in which the teeth (22) act with their first side (22a) against the first side (14th) of the corresponding longitudinal channel (14), with the second sides (22b, 14b) of the teeth (22) and the channels (23) remaining distanced in a lateral direction and without contact therebetween. In this way, in case of a deformation of the first sides (22a, 14a) of the teeth (22) or the channels (14) due to, for example, excessive tightening, the second sides (22b, 14b) of the teeth and the channels remain intact, allowing the subsequent loosening and extraction of the screw (1).

In the operative loosening position shown in figure 5, the teeth (22) operate with a second side (22b) against the second side (14b) of the corresponding channels (14), with the first sides (22a, 14a) of the teeth (22) and the channels (14) remaining laterally distanced and without contact therebetween.

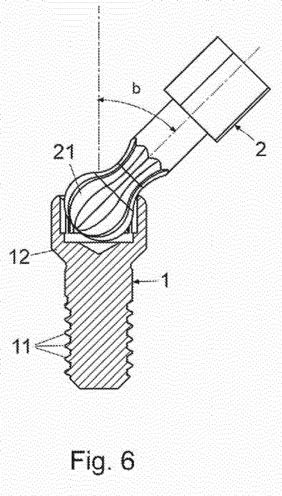

As can be observed in figure 6, the configuration of the toothed head (21) of the tool (2) and the prismatic housing (13) of the screw (1) allow an angulation (b) between the tool (2) and the screw (1) of up to 45 degrees, offering in this way greater work functionality in all the prostheses manufactured either by conventional gluing, subtraction (milling CAD-CAM) or addition (SLM, DMLS), or mass-produced pieces.

The longitudinal channels (14) have in the convergence area of their first (14th) and second side (14b) a rounded intermediate reinforcing surface (14c), which improves resistance of the screws, eliminating possible crack propagation areas and fracturing thereof.

Having described sufficiently the nature of the invention, as well as a preferred embodiment, it is stated for the appropriate purposes that the materials, shape, size and arrangement of the described elements may be modified, provided said modification does not entail an alteration of the essential characteristics of the invention claimed below.

## Claims

1. Screw and drive tool for dental implantology; comprising: one of them, a rounded toothed head (21), with a series of teeth (22) distributed peripherally; and another, a prismatic housing (13) with a plurality of longitudinal channels (14) distributed in the periphery; the channels being equal to or greater than the number of teeth (22) of the toothed head (21) and preferably a multiple thereof; **characterized in that** the aforementioned longitudinal channels (14) have a greater width than the corresponding teeth (22), so that in the coupling position of the screw with the drive tool, the toothed head (21) is imparted relative rotation of a certain breadth (a) inside the prismatic housing (13) and with respect to the geometric screw axis, between:
- an operative tightening position, in which a first side (22nd) of the teeth (22) establishes surface contact with a first side (14th) of the channels (14) and the second side (22b) of the teeth (22) remains distanced from a second side (14b) of the channels (14) and without contact with the aforementioned second side (14b) and;
- an operative loosening position, in which the second side (22b) of the teeth (22) establishes surface contact with the second side (14b) of the channels (14), and the first side (22a) of the teeth remains distanced from the first side (14a) of the channels (14) and without contact with the first aforementioned side (14b).

2. Screw and drive tool, according to claim 1, **characterized in that** the prismatic housing (13) has a depth of between 0,5 and 2,0 millimeters.

3. Screw and drive tool, according to claim 1, **characterized in that** the toothed head (21) has a diameter of between 0,8 mm and 3,0 millimeters.

4. Screw and drive tool, according to claim 1, **characterized in that** the toothed head (21) has a spherical or oval shape.

5. Screw and drive tool, according to claim 1, **characterized in that** the prismatic housing (13) is defined in the head (12) of the screw (1) and the toothed head (21) in the drive tool (2).

6. Screw and drive tool, according to claim 1, **characterized in that** the longitudinal channels (14) have in the convergence area of their first (14a) and second side (14b) a rounded intermediate reinforcing surface (14c).
